(19) Europäisches Patentamt / European Patent Office / Office européen des brevets

(11) **EP 2 661 612 B1**

(12) **FASCICULE DE BREVET EUROPEEN**

(45) Date de publication et mention de la délivrance du brevet:
**08.08.2018 Bulletin 2018/32**

(21) Numéro de dépôt: **11813417.0**

(22) Date de dépôt: **21.12.2011**

(51) Int Cl.:
*G01J 1/08* *(2006.01)*

(86) Numéro de dépôt international:
**PCT/IB2011/055857**

(87) Numéro de publication internationale:
**WO 2012/093306 (12.07.2012 Gazette 2012/28)**

(54) **DISPOSITIF DE FORMATION D'UN RESEAU D'INTERFERENCES SUR UN ECHANTILLON.**

VORRICHTUNG ZUR BILDUNG EINES INTERFERENZGITTERS AUF EINER PROBE

DEVICE FOR FORMING AN INTERFERENCE GRATING ON A SAMPLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.01.2011 FR 1100014**

(43) Date de publication de la demande:
**13.11.2013 Bulletin 2013/46**

(73) Titulaires:
- **Centre National de la Recherche Scientifique 75016 Paris (FR)**
- **École Supérieure d'Électricité 91192 Gif sur Yvette Cedex (FR)**

(72) Inventeur: **LONGEAUD, Christophe F-75014 Paris (FR)**

(74) Mandataire: **Joubert, Cécile et al Marks & Clerk France Counseils en Propriete Industrielle Immeuble "Visium" 22, avenue Aristide Briand 94117 Arcueil Cedex (FR)**

(56) Documents cités:
**DE-A1- 3 732 065**

**EP 2 661 612 B1**

**Description**

L'invention concerne un dispositif de formation d'un réseau d'interférences sur un échantillon par exemple un élément photoconducteur, éventuellement pourvu d'électrodes.

La formation d'un réseau d'interférences sur un échantillon notamment photoconducteur permet de l'activer optiquement et le cas échéant d'en mesurer des propriétés.

C'est ainsi que le Brevet US 4 891 582 décrit une technique de mesure de la longueur de diffusion $L_D$ des porteurs minoritaires dans un élément photoconducteur.

Cette technique s'applique en particulier à un semi-conducteur photoconducteur en couche mince destiné à être incorporé dans des modules photovoltaïques.

La mesure de ce paramètre permet de déterminer la qualité électronique du film mince afin de vérifier si ce dernier est apte à être intégré dans un module photovoltaïque, c'est-à-dire à même de conduire à un bon rendement de conversion.

La mesure de la longueur de diffusion des porteurs minoritaires $L_D$ dans un semi-conducteur photoconducteur en couche mince comme le silicium amorphe hydrogéné se fait par interférométrie laser.

L'échantillon est constitué d'une couche mince déposée sur un substrat en général transparent et isolant sur laquelle on a déposé deux électrodes parallèles distantes par exemple de 1 mm. Une polarisation électrique est appliquée entre ces deux électrodes. Un faisceau laser de lumière polarisée verticalement de longueur d'onde λ est séparé en deux faisceaux qui sont ensuite renvoyés sur l'échantillon en formant un angle donné.

Il se développe entre les électrodes un réseau d'interférence dont le pas dépend de l'angle entre les deux faisceaux. Il résulte de cette illumination un certain photo-courant courant $I_w$.

Grâce à une lame demi-onde λ/2, on fait basculer la polarisation d'un des deux faisceaux, ce qui remplace le réseau d'interférences par une illumination uniforme. Il résulte de cette illumination un certain courant photo-courant $I_{W0}$.

La direction des photo-courants mesurés est perpendiculaire aux franges du réseau. On trace ensuite la variation du rapport $\beta = I_W/I_{W0}$ en fonction du pas du réseau que l'on calcule de manière connue à partir de l'angle entre les deux faisceaux et un accord à partir d'une équation simple permet de déduire de cette courbe la longueur de diffusion des porteurs minoritaires.

Le lien entre β et $L_D$ est le suivant. Si le pas du réseau est faible, la diffusion des porteurs minoritaires efface le réseau qui n'a quasi aucune influence sur le courant mesuré. Le paramètre β est alors voisin de 1. Si le pas du réseau est grand, la diffusion des porteurs minoritaires ne peut pas l'effacer. Il se met en place un réseau de charge d'espace et de champs locaux qui modifie le courant des porteurs majoritaires, le paramètre β pouvant atteindre la valeur -1.

C'est le même phénomène de charge d'espace qui est à l'origine de la limitation du courant dans une cellule solaire. Dans une telle cellule, si les porteurs minoritaires ne peuvent diffuser, leur accumulation entraîne la création d'une charge d'espace qui s'oppose au transport des porteurs majoritaires et donc engendre un moindre rendement. La mesure de $L_D$ sur une couche mince permet donc facilement de savoir si celle-ci peut être intégrée dans une cellule avec de grandes chances d'obtenir un bon rendement sans avoir à réaliser le dispositif complet, d'où son intérêt pour tous les fabricants de cellules solaires à base de couches minces.

Cette technique décrite dans le Brevet US 4 891 582 s'applique aux photoconducteurs et aux semi-conducteurs sensibles à la lumière.

La mise en oeuvre décrite dans ce document implique une mesure manuelle, qui est relativement délicate et longue à mettre en oeuvre, puisque chaque étape de mesure qui correspond à un pas différent du réseau d'interférences implique un nouveau réglage.

La présente invention a pour objet un dispositif qui soit compatible avec une automatisation du processus qui permet de faire varier le pas d'un réseau d'interférences, notamment en vue de l'application citée ci-dessus.

L'invention concerne ainsi un dispositif de formation d'un réseau d'interférences sur un échantillon constitué par exemple par un élément photoconducteur, le dispositif comportant les caractéristiques de la revendication 1. Selon une première variante qui permet de compenser approximativement la variation de longueur optique, le dispositif est caractérisé en ce qu'il comporte sur le trajet d'un premier tronçon du deuxième faisceau une paire de miroirs de renvoi pour renvoyer le deuxième faisceau de mesure en aval de la paire de miroirs de renvoi selon un deuxième tronçon formant avec le premier tronçon un angle fixe, en ce que le deuxième miroir est situé en aval de la paire de miroirs de renvoi et est constitué par un miroir mobile en translation le long du deuxième tronçon, le deuxième tronçon du deuxième faisceau venant frapper le miroir mobile selon une pluralité de dits premiers points d'impact, pour former en aval du miroir mobile un troisième tronçon faisant un angle fixe avec le deuxième tronçon, et en ce qu'il comporte au moins deux dits deuxième miroirs de renvoi qui sont pré-positionnés pour renvoyer le troisième tronçon du deuxième faisceau qui frappe lesdits miroirs secondaires de renvoi selon lesdits deuxièmes points d'impact en formant ladite trajectoire finale qui impacte ledit point P de l'échantillon pour définir au moins deux angles θ différents avec le premier faisceau.

Selon une variante préférée, le procédé est caractérisé en ce qu'il comporte un miroir mobile en rotation, un premier miroir parabolique dont le foyer est placé sur le trajet du deuxième faisceau, et sur l'axe de rotation du miroir mobile en rotation, le miroir mobile en rotation renvoyant le deuxième faisceau à partir dudit foyer sur le premier miroir parabolique, selon une pluralité de premiers points d'impact, pour former un tronçon intermédiaire qui vient frapper un deuxième miroir parabolique selon une pluralité de dits deuxièmes points d'impact, ledit point P de l'échantillon ECH sur lequel convergent le premier et le deuxième faisceaux étant situé au foyer du deuxième miroir parabolique.

Le premier tronçon du deuxième faisceau de mesure est de préférence colinéaire au faisceau issu du laser.

Le dispositif est avantageusement caractérisé en ce qu'il présente un module de commande pour commander le déplacement du miroir mobile selon au moins deux positions de mesure.

Le dispositif peut comporter un élément pour faire varier la polarisation de la lumière, par exemple du premier faisceau, qui est avantageusement une lame demi-onde $\lambda/2$, éventuellement couplée à un hacheur, qui peut être disposée sur un élément mobile en rotation, ou bien un polariseur rotatif éventuellement couplé à un modulateur électro-optique, de manière à former sur l'échantillon un réseau d'interférences ou à soumettre celui-ci à une illumination uniforme.

Il peut alors comporter un dispositif pour mesurer les valeurs des courants $I_w$ et $I_{w0}$ à chaque position, $I_w$ correspondant au cas où un réseau d'interférences est formé sur l'échantillon, et $I_{w0}$ au cas où l'échantillon est soumis à une dite illumination uniforme.

Le dispositif présente de préférence un moteur pas à pas pour commander le déplacement linéaire ou rotatif du miroir mobile en translation.

D'autres caractéristiques et avantages de l'invention apparaîtront mieux à la lecture de la description ci-après, en liaison avec les dessins dans lesquels :

- les figures 1a à 1c représentent une première variante de réalisation du dispositif selon l'invention, la figure 1d étant un schéma illustrant le calcul des trajets optiques.

- la figure 2 représente une deuxième variante préférée du dispositif selon l'invention.

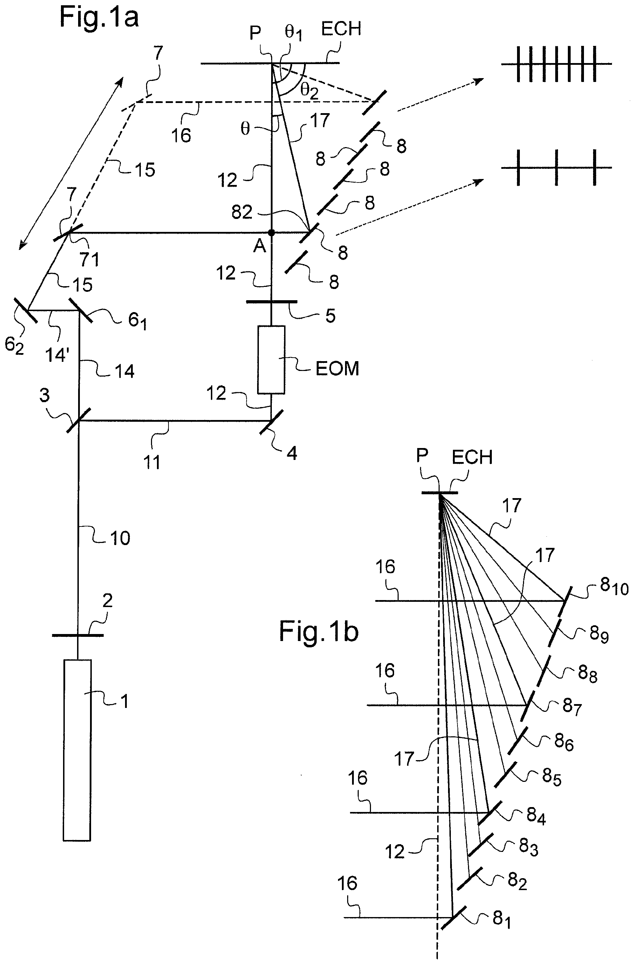

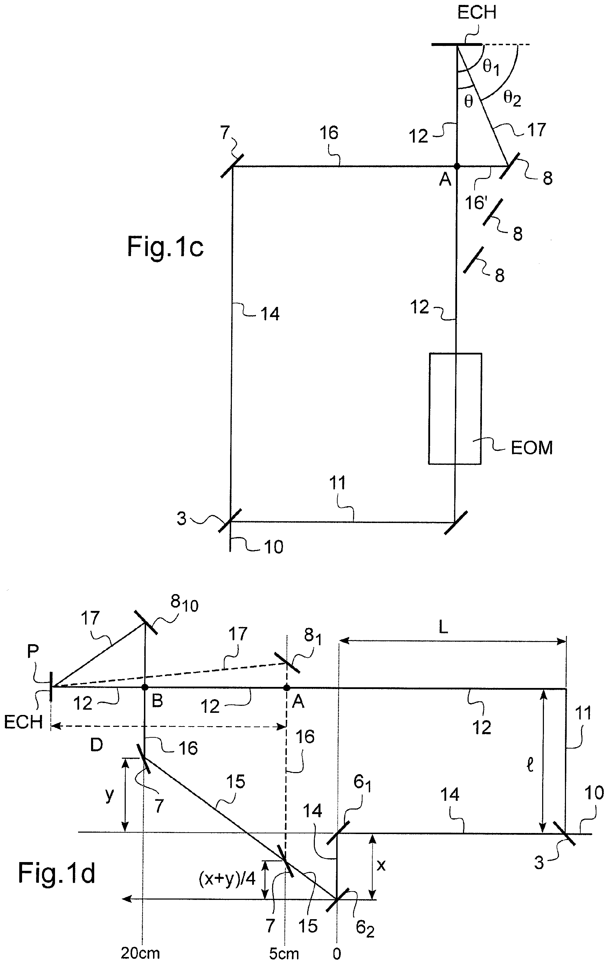

Le dispositif illustré par la figure 1 comporte un laser 1 émettant un faisceau lumineux qui est polarisé linéairement par exemple verticalement par un polariseur 2.

Le faisceau principal 10 est séparé en deux par un miroir séparateur 3, à savoir un premier faisceau 11 qui est réfléchi par le miroir 3 et un deuxième faisceau 14 qui est transmis directement par le miroir séparateur 3. Le premier faisceau est réfléchi sur un miroir 4 pour donner un faisceau 12 qui traverse éventuellement un modulateur électro-optique EOM et un polariseur rotatif 5.

La fonction du modulateur EOM éventuellement associé au polariseur est de manière connue en soi, de moduler l'intensité de la lumière pour permettre de faciliter les mesures en recueillant le signal aux bornes des électrodes de l'échantillon ECH et en traitant celui-ci à l'aide d'une détection synchrone. Ce couple modulateur EOM/polariseur peut avantageusement se remplacer par un hacheur et une lame demi-onde $\lambda/2$.

Le faisceau renvoyé 12 intercepte la surface de l'échantillon ECH en un point P, avec un premier angle d'incidence $\theta_1$, par exemple un angle de 90°.

Le deuxième faisceau 14 est dévié par deux miroirs de renvoi $6_1$ (faisceau 14') et $6_2$ pour former une deuxième portion 15 inclinée par rapport à la première portion de faisceau 14.

Un miroir de renvoi 7 déplaçable linéairement le long de l'axe de la deuxième portion de faisceau 15 permet de former une troisième portion de faisceau 16 qui est dévié par l'un des miroirs de renvoi secondaires 8 dont la position et les angles d'inclinaison sont choisis pour que dans chaque position du miroir de renvoi 7, la quatrième portion de faisceau 17 qui en constitue la trajectoire finale atteigne la surface de l'échantillon ECH au point P avec un angle d'incidence $\theta_2$ en formant un angle $\theta$ avec la deuxième portion du premier faisceau 12 et dans le cas d'espèce avec la normale à l'échantillon ECH, cette angle $\theta$ étant différent pour chacun des miroirs de renvoi 8, ce qui permet, en faisant varier l'angle $\theta$ entre les portions de faisceau 12 et 17, de balayer une gamme de valeurs du pas du réseau d'interférence.

Chaque position du miroir de renvoi 7 définit un premier point de renvoi 71 auquel correspond de manière univoque un deuxième point de renvoi 82 par un miroir de renvoi secondaire 8, pour que le deuxième faisceau atteigne le point P.

Si on souhaite mettre en oeuvre le procédé de mesure décrit dans le Brevet US 4 891 582, alors, à chaque position du miroir 7 mobile en translation, une mesure des courants $I_{W0}$ et $I_{W0}$ est effectuée. A cet effet, on oriente une lame demi-onde 5 (ou bien un polariseur rotatif) de manière à permettre que les deux faisceaux 12 et 17 qui se croisent au point P aient, soit une polarisation parallèle, ce qui leur permet de créer des interférences sur la surface, ce qui permet de recueillir le courant $I_w$, soit que leurs polarisations soient perpendiculaires, ce qui fait que le réseau d'interférences est remplacé par une illumination uniforme, ce qui permet de recueillir le courant $I_{w0}$.

Le dispositif décrit ci-dessus permet de changer l'angle $\theta$ entre les faisceaux sans avoir à effectuer de réglage tout en maintenant une excellente superposition au point P afin que les interférences puissent se former, ce qui permet d'obtenir de manière automatique des réseaux d'interférences de pas différents, ce qui permet en particulier de réaliser des mesures automatiques.

Le déplacement d'un unique miroir à l'aide d'une platine de translation motorisée permet d'assurer un pas de déplacement de l'ordre de 1 micron, ce qui en conjugaison avec la position précisément définie des miroirs de renvois secondaires fixes 8 permet d'assurer un renvoi précis selon divers angles préréglés.

Le dispositif permet de réaliser des mesures dans une gamme de pas du réseau d'interférences typiquement entre 1μ et 15μ, par exemple avec un laser de longueur d'onde $\lambda$ = 633 nm.

Le basculement de la polarisation se fait par exemple par interposition d'une lame demi-onde $\lambda$/2 ou d'un polariseur rotatif 5 placé sur un élément dont on peut commander la rotation.

L'automatisation de la mesure, à savoir la commande du déplacement du miroir par une platine de translation et de la lame demi-onde (ou du polariseur rotatif) par une platine de rotation, la mesure des courants et leurs amplification et les calculs subséquents relatifs à une mesure, par exemple de la longueur de diffusion $L_D$ des porteurs minoritaires, peut être pilotée par un ordinateur à l'aide d'un logiciel spécifique, développé dans un langage de programmation connu sous la marque déposée LABVIEW.

La correction des différences de marche entre les deux faisceaux peut être effectuée de la manière suivante : Afin d'utiliser des lasers relativement "bon marché" qui ne présentent pas une très grande longueur de cohérence, il faut autant que possible que les chemins optiques des deux faisceaux aient des valeurs les plus proches possible quel que soit le miroir de renvoi 8 utilisé (figure 1b).

Le schéma de la figure 1c illustre *a contrario* un schéma de montage simple sans compensation, dans lequel le miroir mobile 7 se déplacerait le long du tronçon 14 non dévié issu de la lame séparatrice 3. La longueur des tronçons 14 et 16 entre la lame séparatrice 3 et le point A où se croisent les portions du faisceau 12 et 16, les distances sont les mêmes mais pas les chemins optiques. En effet, le passage du faisceau 12 dans le cristal du modulateur rallonge son chemin d'environ 5 cm (Longueur du cristal$\times$($n$-1) où $n$ est l'indice du cristal). Du point A pour arriver jusqu'à l'échantillon ECH, le faisceau 16', 17 parcourt le petit côté et l'hypoténuse d'un triangle rectangle tandis que l'autre faisceau 12 en parcourt le grand côté. Donc, le faisceau 16', 17 a un trajet du point A à l'échantillon ECH qui est plus long que celui du faisceau 12. Toutefois cela ne compense pas systématiquement les 5 cm supplémentaires éventuellement parcourus par le faisceau 12 avant son arrivée au point A.

Si on adopte la géométrie de la figure 1c, les différences de marche totales entre le faisceau 14, 16, 17 et le faisceau 11, 12 depuis la lame séparatrice 3 jusqu'à l'échantillon ECH sont comprises entre -4,3 cm pour le miroir de renvoi $8_1$ et +3,6 cm pour le miroir de renvoi n° $8_{10}$. La différence de marche entre les deux faisceaux du premier au dernier miroir varie donc de $\pm 4$ cm ce qui peut être préjudiciable à un fonctionnement optimal de l'expérience lorsqu'elle est réalisée avec des lasers de faible longueur de cohérence.

La figure 1b représente un schéma plus détaillé de la disposition des mirois de renvoi pour permettre une compensation partielle. Ces derniers sont numérotés de $8_1$ à $8_{10}$. Le faisceau 12 est représenté en pointillés et différents faisceaux 16 sont représentés selon la position du miroir 7.

Pour compenser ces écarts, le miroir 7 n'est pas déplacé parallèlement au faisceau 12, mais avec un angle rentrant (figures 1a et 1d) de façon à augmenter le trajet du faisceau 14, 15, 16 lorsqu'il frappe le miroir de renvoi $8_1$ et à diminuer ce même trajet lorsqu'il frappe le miroir de renvoi $8_{10}$. Cette correction ne peut être que partielle car les équations mises enjeu ne sont pas linéaires.

La figure 1d représente donc le schéma adopté pour assurer cette compensation au moins en partie.

Le calcul ci-dessous permet d'optimiser cette compensation partielle.

Le calcul du chemin optique Ch I parcouru par le faisceau 14, 14', 15, 16, 17 depuis la lame séparatrice 3 jusqu'à l'échantillon ECH en passant par le miroir de renvoi $8_1$ donne :

$$ChI = L + x + \sqrt{25 + \left(\frac{x+y}{4}\right)^2} + \left[x - \left(\frac{x+y}{4}\right)\right] + l + D + 0,7 \qquad (1)$$

*D* désigne la distance entre le point A où se croisent les faisceaux 12 et 16 et l'échantillon ECH et 0,7 l'excédent de parcours (en cm) en passant par le miroir de renvoi.

Le calcul du chemin optique ChII de l'autre faisceau (11, 12) qui traverse le modulateur EOM, depuis la lame séparatrice 3 jusqu'à l'échantillon ECH donne :

$$ChII = L + l + 5 + D + 5 \qquad (2)$$

Toutes les grandeurs sont exprimées en cm. Les 5 derniers cm de l'équation (2) proviennent du chemin optique supplémentaire dans le modulateur EOM. On obtient finalement :

$$ChI - ChII = x + \sqrt{25 + \left(\frac{x+y}{4}\right)^2} + \left[x - \left(\frac{x+y}{4}\right)\right] - 10 + 0,7 \qquad (3)$$

Le calcul du chemin optique Ch'I parcouru par le faisceau 14, 14', 15, 16, 17 depuis la lame séparatrice 3 jusqu'à l'échantillon en passant par le miroir de renvoi $8_{10}$ donne :

$$Ch'I = L + x + \sqrt{400 + (x+y)^2} - y + l + d + 8,6 \qquad (4)$$

d étant la distance entre le point B et l'échantillon ECH et 8,6 l'excédent de parcours en passant par le miroir de renvoi $8_{10}$. Le calcul du chemin optique ChII de la lame séparatrice 3 jusqu'à l'échantillon ECH reste le même :

$$ChII = L + l + 20 + d + 5 \qquad (5)$$

Toutes les grandeurs sont aussi exprimées en cm. Les 5 derniers cm de l'équation (5) proviennent comme précédemment du chemin optique supplémentaire dans le modulateur électro-optique EOM. On obtient finalement :

$$Ch'I - ChII = x + \sqrt{400 + (x+y)^2} - y - 20 + 3,6 \qquad (6)$$

On peut alors chercher $x$ et $y$ pour que les équations (3) et (6) soient nulles, ce qui donne une différence de marche nulle entre les deux faisceaux par exemple pour les miroirs extrêmes $8_1$ et $8_{10}$. Donc, à résoudre :

$$0 = x + \sqrt{25 + \left(\frac{x+y}{4}\right)^2} + \left[x - \left(\frac{x+y}{4}\right)\right] - 10 + 0,7$$

$$0 = x + \sqrt{400 + (x+y)^2} - y - 20 + 3,6$$

Ce qui donne, après un calcul lourd mais simple, $x$ = 3,46 cm et $y$ = 12,9 cm.

Cette correction n'est que partielle car si les différences de chemin optique sont nulles pour les miroirs $8_1$ et $8_{10}$, un calcul similaire effectué pour les miroirs $8_4$ et $8_7$ montre respectivement [ChI-ChII] = -0,75 cm et [Ch'I-ChII] = -0,97 cm. Toutefois, on voit que la différence de chemin optique maximale n'est plus que de l'ordre du cm, ce qui permet d'utiliser des lasers avec des longueurs de cohérence relativement courtes (quelques cm) donc relativement bon marché, mais peut-être pas de diode laser sans traitement du signal lumineux au préalable.

On remarque que l'on pourra calculer une optimisation en annulant la différence de marche entre les deux faisceaux pour un autre couple de miroirs de renvoi, par exemple $8_2$ et $8_9$ ou $8_4$ et $8_7$ par exemple.

On remarque également que le calcul ci-dessus s'applique également au cas où on ne met pas en oeuvre un modulateur électro-optique. La compensation de parcours entre les deux faisceaux peut s'effectuer par exemple à l'aide d'une paire de miroirs de renvoi.

Aux dessins, on a choisi un angle $\theta_1$ = 90°. Il s'agit d'une mise en oeuvre préférée qui facilite le réglage du banc optique. D'ailleurs, on voit aisément qu'une rotation de l'échantillon autour du point P sur un axe perpendiculaire au plan des figures ne modifie pas la formation des interférences, puisque l'angle $\theta$ reste le même.

Les tronçons 12 et 16 n'ont pas besoin non plus d'être perpendiculaires.

Une compensation précise peut être obtenue en mettant en oeuvre deux miroirs paraboliques disposés tête-bêche, leurs axes focaux étant parallèles.

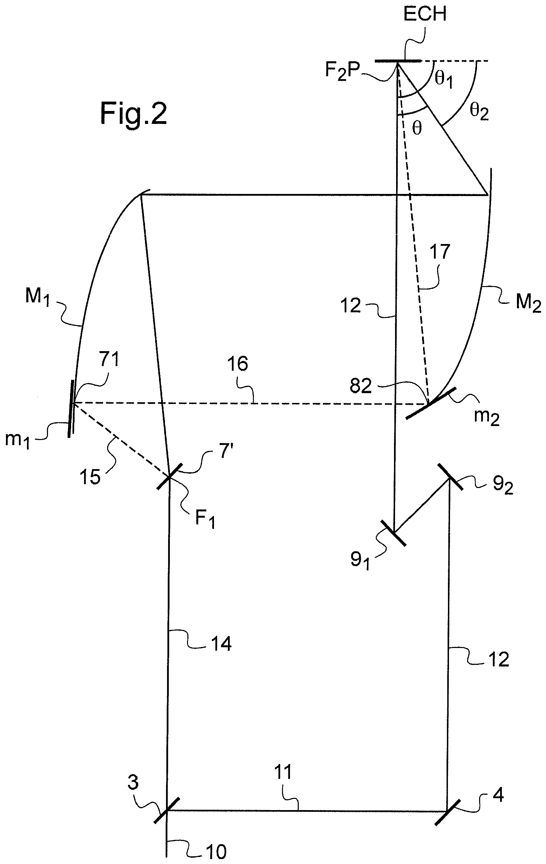

Le point P de l'échantillon ECH est placé (Fig. 2) au foyer $F_2$ d'un miroir parabolique désaxé $M_2$. Au foyer $F_1$ de l'autre miroir parabolique désaxé $M_1$, on place l'axe de rotation un miroir plan 7' dont la rotation change l'angle d'arrivée du faisceau 14 sur le miroir parabolique $M_1$ tout en conservant les deux faisceaux dans le même plan. Le trajet d'un rayon du point $F_1$ à l'échantillon reste constant. Donc la différence de marche entre les deux faisceaux est une constante que l'on peut compenser en rallongeant par un système de miroirs $9_1$ et $9_2$ l'un ou l'autre des trajets, selon la géométrie.

A titre d'exemple, dans la figure 2 la compensation est faite sur le faisceau 12 (miroirs de renvoi $9_1$ et $9_2$).

Avantages :

a/ La différence de marche entre les deux faisceaux peut être rendue complètement nulle et donc permet l'utilisation de diodes laser à condition qu'elles soient monomodes.

b/ la variation de l'angle du faisceau 17 frappant l'échantillon est continue et non plus discrète comme dans le cas précédent et on peut fixer la valeur de cet angle à partir de l'angle imposé au miroir situé au foyer $F_1$ du miroir parabolique.

c/ En cas de déréglage, le nombre de miroirs à tester et régler à nouveau est nettement plus faible que dans le cas précédent.

Exemple :

Deux miroirs paraboliques désaxés de même distance focale 7,5 cm, avec un diamètre de 7,5 cm ce qui donne au centre un angle de renvoi de l'ordre de 60° et un décalage entre l'axe du paraboloïde et l'axe du miroir de l'ordre de 10 cm.

L'un et/ou l'autre des miroirs paraboliques peut être remplacé par une série de miroirs plans (voir les références $m_1$ et $m_2$ à la figure 2) tangents en un point 71, et/ou 82 au miroir parabolique ainsi remplacé, ce qui conduit à un nombre limité de couples de points d'impact 71, 82.

**Revendications**

1. Dispositif de formation d'un réseau d'interférences sur un échantillon, le dispositif comportant un laser émettant un faisceau lumineux de longueur d'onde $\lambda$, une lame séparatrice séparant le faisceau émis par le laser en un premier tronçon (11) de premier faisceau et un premier tronçon (14) de deuxième faisceau, le premier tronçon (11) de premier faisceau étant dévié dans une première direction, un premier miroir de renvoi fixe pour renvoyer le premier tronçon du premier faisceau sur un point (P) de l'échantillon (ECH) selon un deuxième tronçon (12) de premier faisceau et un premier angle d'incidence fixe $\theta_1$, ainsi qu'au moins un deuxième miroir de renvoi fixe pour renvoyer le premier tronçon (14) de deuxième faisceau selon une trajectoire finale (17) qui atteint ledit point (P) de l'échantillon selon un deuxième angle d'incidence $\theta_2$, pour former sur l'échantillon un réseau d'interférences dont le pas dépend de la différence angulaire $\theta$ entre le premier angle d'incidence $\theta_1$ et le deuxième angle d'incidence $\theta_2$, le trajet du deuxième faisceau étant **caractérisé en ce qu'**il comporte un miroir de renvoi (7, 7') mobile en translation, respectivement en rotation, pour diriger et renvoyer le deuxième faisceau depuis une pluralité de premiers points de renvoi (71), formée par une pluralité de positions du miroir mobile (7) lorsque le miroir mobile est mobile en translation, respectivement formée par une pluralité de points d'impact d'un premier miroir parabolique fixe (M1) lorsque le miroir mobile (7') est mobile en rotation, vers une pluralité de deuxièmes points de renvoi (82), formée par des positions d'une pluralité de deuxièmes miroirs (8) fixes d'orientations différentes pour garantir que le point P de l'échantillon soit toujours atteint par le second faisceau, respectivement formée par une pluralité de points d'impact d'un deuxième miroir parabolique fixe (M2), en formant une pluralité de couples comportant un premier (71) et un deuxième (82) point de renvoi, dont chacun correspond à une dite trajectoire finale (17) du deuxième faisceau avec une valeur différente de l'angle $\theta_2$, de manière à faire varier la valeur de l'angle d'incidence $\theta_2$ et donc de la différence angulaire $\theta$, et **en ce que** les premiers points de renvoi (71) sont disposés selon une trajectoire linéaire, respectivement parabolique, s'étendant depuis une extrémité amont, éloignée de l'échantillon où elle est écartée du faisceau (10) émis par le laser dans le sens opposé de celui du premier tronçon (11) de premier faisceau, jusqu'à une extrémité aval plus proche de l'échantillon (ECH), ladite trajectoire linéaire ou parabolique évoluant depuis l'extrémité amont jusqu'à l'extrémité aval en direction dudit deuxième tronçon (12) de premier faisceau de manière à compenser au moins partiellement les variations de la longueur optique du deuxième faisceau pour les paires de premier (71) et deuxième (82) points de renvoi dont chacune correspond à une valeur de la différence angulaire $\theta$.

2. Dispositif selon la revendication 1, **caractérisé en ce qu'**il comporte sur le trajet du premier tronçon (14) du deuxième faisceau une paire de miroirs de renvoi ($6_1$, $6_2$) pour renvoyer le deuxième faisceau en aval de la paire de miroirs de renvoi ($6_1$, $6_2$) selon un deuxième tronçon (15) formant avec le premier tronçon (14) un angle fixe, **en ce que** le deuxième miroir est situé en aval de la paire de miroirs de renvoi ($6_1$, $6_2$) et est constitué par un miroir (7) mobile en translation le long du deuxième tronçon (15), le deuxième tronçon (15) du deuxième faisceau venant frapper le miroir mobile selon une pluralité de dits premiers points de renvoi (71) disposés selon une dite trajectoire linéaire, pour former en aval du miroir mobile un troisième tronçon (16) faisant un angle fixe avec le deuxième tronçon (15), et **en ce qu'**il comporte au moins deux dits deuxième miroirs de renvoi ($8_1$, $8_2$ ..... $8_{10}$) qui sont pré-positionnés pour renvoyer le troisième tronçon (16) du deuxième faisceau de mesure qui frappe lesdits miroirs secondaires de renvoi selon lesdits deuxièmes points de renvoi (82), selon ladite trajectoire finale (17) qui impacte ledit point (P) de l'échantillon (ECH) en faisant au moins deux angles $\theta$ différents avec le premier faisceau de mesure (11, 12).

**3.** Dispositif selon la revendication 1, **caractérisé en ce qu'**il comporte un miroir (7') mobile en rotation, un premier miroir parabolique ($M_1$) dont le foyer ($F_1$) est placé sur le trajet du deuxième faisceau, et sur l'axe du miroir (7') mobile en rotation, le miroir (7') mobile en rotation renvoyant le deuxième faisceau à partir dudit foyer ($F_1$) sur le premier miroir parabolique ($M_1$), selon une pluralité de dits premiers points d'impact (71), pour former un tronçon intermédiaire (16) du deuxième faisceau qui vient frapper un deuxième miroir parabolique ($M_2$) selon une pluralité de dits deuxièmes points d'impact (82), ledit point (P) de l'échantillon (ECH) sur lequel convergent le premier et le deuxième faisceaux étant situé au foyer ($F_2$) du deuxième miroir parabolique ($M_2$).

**4.** Dispositif selon une des revendications 2 ou 3, **caractérisé en ce que** le premier tronçon (14) du deuxième faisceau de mesure est colinéaire au faisceau (10) issu du laser.

**5.** Dispositif selon une des revendications précédentes, **caractérisé en ce qu'**il présente un module de commande pour commander le déplacement du miroir mobile (7, 7') selon au moins deux positions de mesure.

**6.** Dispositif selon une des revendications précédentes, **caractérisé en ce qu'**il comporte un élément pour faire varier la polarisation qui est une lame demi-onde $\lambda/2$ positionnée sur le trajet d'un faisceau, de manière à former un réseau d'interférences sur l'échantillon (ECH) ou à soumettre celui-ci à une illumination uniforme.

**7.** Dispositif selon la revendication 6, **caractérisé en ce que** la lame demi-onde est couplée à un hacheur.

**8.** Dispositif selon une des revendications 1 à 5, **caractérisé en ce qu'**il comporte un élément pour faire varier la polarisation qui est un polariseur tournant de manière à former un réseau d'interférences sur l'échantillon (ECH) ou soumettre celui-ci à une illumination uniforme.

**9.** Dispositif selon la revendication 8, **caractérisé en ce qu'**il présente un modulateur électro-optique interposé sur le trajet du premier faisceau.

**10.** Dispositif selon une des revendications 6 à 9, **caractérisé en ce qu'**il comporte un dispositif pour mesurer les valeurs des courants $I_w$ et $I_{w0}$ à chaque position, $I_w$ correspondant au cas où un réseau d'interférences est formé sur l'échantillon, et $t_{w0}$ au cas où l'échantillon est soumis à une dite illumination uniforme.

**11.** Dispositif selon une des revendications précédentes, **caractérisé en ce qu'**il comporte un moteur pas à pas de commande du déplacement du miroir mobile (7, 7').

**12.** Dispositif selon une des revendications précédentes, **caractérisé en ce que** l'échantillon (ECH) est un élément photoconducteur.

## Patentansprüche

**1.** Vorrichtung zum Bilden eines Interferenzgitters auf einer Probe, wobei die Vorrichtung einen Laser beinhaltet, welcher einen Lichtstrahl der Wellenlänge $\lambda$ abgibt, eine Trennplatte, welche den vom Laser abgegebenen Strahl in einen ersten Abschnitt (11) des ersten Strahls und in einen ersten Abschnitt (14) des zweiten Strahls trennt, wobei der erste Abschnitt (11) des ersten Strahls in eine erste Richtung abgelenkt wird, einen ersten festen Umlenkspiegel zum Umlenken des ersten Abschnitts des ersten Strahls auf einen Punkt (P) der Probe (ECH) entlang eines zweiten Abschnitts (12) des ersten Strahls und mit einem ersten festen Einfallwinkel $\theta_1$, sowie mindestens einen zweiten festen Umlenkspiegel zum Umlenken des ersten Abschnitts (14) des zweiten Strahls entlang einer Endbahn (17), welche den Punkt (P) der Probe mit einem zweiten Einfallwinkel $\theta_2$ erreicht, um auf der Probe ein Interferenzgitter zu bilden, dessen Teilung von der Winkeldifferenz $\theta$ zwischen dem ersten Einfallwinkel $\theta_1$ und dem zweiten Einfallwinkel $\theta_2$ abhängt, wobei die Bahn des zweiten Strahls **dadurch gekennzeichnet ist, dass** sie einen jeweils verschiebbar und drehbar beweglichen Umlenkspiegel (7, 7') beinhaltet, um den zweiten Strahl von einer Vielzahl erster Umlenkpunkte (71) zu lenken und umzulenken, gebildet durch eine Vielzahl von Positionen des beweglichen Spiegels (7), wenn der bewegliche Spiegel sich verschiebt, bzw. gebildet aus einer Vielzahl von Eintrittspunkten eines ersten festen Parabolspiegels (M1), wenn der bewegliche Spiegel (7') sich drehend bewegt, an eine Vielzahl zweiter Umlenkpunkte (82), gebildet durch Positionen einer Vielzahl von zweiten festen Spiegeln (8) unterschiedlicher Ausrichtung, um zu garantieren, dass der Punkt P der Probe stets durch den zweiten Strahl erreicht wird, oder gebildet aus einer Vielzahl von Eintrittspunkten eines zweiten festen Parabolspiegels (M2), durch Bilden einer Vielzahl von Paaren, welche einen ersten (71) und einen zweiten (82) Umlenkpunkt beinhalten, wobei jeder davon einer solchen Endbahn (17) des zweiten Strahls mit einem Wert entspricht, der sich vom Winkel $\theta_2$ unterscheidet, um so den Wert des Einfallwinkels $\theta_2$ und daher der Winkeldifferenz $\theta$ zu variieren, und dadurch, dass die ersten Umlenkpunkte (71) in einer linearen Bahn bzw. einer Parabolbahn angeordnet sind, welche sich von einem vorgelagerten Ende, welches von der Probe entfernt ist, wo es von dem Strahl (10) abseits liegt, welcher vom Laser in die Gegenrichtung der Richtung des ersten Abschnitts (11) des ersten Strahls abgegeben wird, bis zu einem nachgelagerten Ende erstreckt, welches näher an der Probe (ECH) liegt, wobei die lineare bzw. Parabolbahn sich vom vorgelagerten bis zum nachgelagerten Ende in Richtung des zweiten Abschnitts (12) des ersten Strahls so entwickelt, dass sie mindestens teilweise die optischen Längenschwankungen des zweiten Strahls für die Paare des ersten (71) und des zweiten (82) Umlenkpunkts, zu kompensieren, wobei ein jedes von ihnen einem Wert der Winkeldifferenz $\theta$ entspricht.

2. Vorrichtung nach Anspruch 1, **dadurch gekennzeichnet, dass** sie auf der Bahn des ersten Abschnitts (14) des zweiten Strahls ein Paar von Umlenkspiegeln ($6_1$, $6_2$) beinhaltet, um den zweiten Strahl in den nachgelagerten Bereich des Umlenkspiegelpaars ($6_1$, $6_2$) entlang eines zweiten Abschnitts (15) umzulenken, welcher mit dem ersten Abschnitt (14) einen festen Winkel bildet, dass der zweite Spiegel sich im nachgelagerten Bereich des Umlenkspiegelpaars ($6_1$, $6_2$) befindet und aus einem Spiegel (7) gebildet wird, welcher verschiebbar entlang des zweiten Abschnitts (15) beweglich ist, wobei der zweite Abschnitt (15) des zweiten Strahls den beweglichen Spiegel in einer Vielzahl von solchen ersten Umlenkpunkten (71) trifft, welche entlang einer solchen linearen Bahn angeordnet sind, um im nachgelagerten Bereich des beweglichen Spiegels einen dritten Abschnitt (16) zu bilden, welcher einen festen Winkel mit dem zweiten Abschnitt (15) bildet, und dass sie mindestens zwei solche Umlenkspiegel ($8_1$, $8_2$ ..... $8_{10}$) beinhaltet, die vorpositioniert sind, um den dritten Abschnitt (16) des zweiten Messstrahls umzulenken, der die sekundären Umlenkspiegel in den zweiten Umlenkpunkten (82) entlang der Endbahn (17) trifft, welche den Punkt (P) der Probe (ECH) trifft, indem sie mindestens zwei unterschiedliche Winkel $\theta$ mit dem ersten Messstrahl (11, 12) bildet.

3. Vorrichtung nach Anspruch 1, **dadurch gekennzeichnet, dass** sie einen drehbar beweglichen Spiegel (7') beinhaltet, einen ersten Parabolspiegel ($M_1$), dessen Brennpunkt ($F_1$) auf der Bahn des zweiten Strahls und auf der Achse des drehbar beweglichen Spiegels (7') positioniert ist, wobei der drehbar bewegliche Spiegel (7') den zweiten Strahl ab dem Brennpunkt ($F_1$) auf den ersten Parabolspiegel ($M_1$) in einer Vielzahl solcher erster Eintrittspunkte (71) ablenkt, um einen Zwischenabschnitt (16) des weiten Strahls zu bilden, welcher einen zweiten Parabolspiegel ($M_2$) in einer Vielzahl solcher zweiter Eintrittspunkte (82) trifft, wobei der Punkt (P) der Probe (ECH), auf welchen der erste und der zweite Strahl konvergieren, im Brennpunkt ($F_2$) des zweiten Parabolspiegels ($M_2$) befindlich ist.

4. Vorrichtung nach einem der Ansprüche 2 oder 3, **dadurch gekennzeichnet, dass** der erste Abschnitt (14) des zweiten Messstrahls mit dem aus dem Laser abgegebenen Strahl (10) kolinear ist.

5. Vorrichtung nach einem der vorhergehenden Ansprüche, **dadurch gekennzeichnet, dass** sie ein Steuerungsmodul zur Steuerung der Bewegung des beweglichen Spiegels (7, 7') in mindestens zwei Messpositionen aufweist.

6. Vorrichtung nach einem der vorhergehenden Ansprüche, **dadurch gekennzeichnet, dass** sie ein Element zum Variieren der Polarisierung beinhaltet, welches eine $\lambda/2$-Halbwellenplatte ist, welche auf der Bahn eines Strahls positioniert ist, um ein Interferenzgitter auf der Probe (ECH) zu bilden oder diese einer einheitlichen Beleuchtung auszusetzen.

7. Vorrichtung nach Anspruch 6, **dadurch gekennzeichnet, dass** die Halbwellenplatte mit einem Zerhacker gekoppelt ist.

8. Vorrichtung nach einem der Ansprüche 1 bis 5, **dadurch gekennzeichnet, dass** sie ein Element zum Variieren der Polarisierung beinhaltet, welches ein drehender Polarisator ist, um ein Interferenzgitter auf der Probe (ECH) zu bilden oder diese einer einheitlichen Beleuchtung auszusetzen.

9. Vorrichtung nach Anspruch 8, **dadurch gekennzeichnet, dass** sie einen elektrooptischen Modulator aufweist, welcher in der Bahn des ersten Strahls angeordnet ist.

10. Vorrichtung nach einem der Ansprüche 6 bis 9, **dadurch gekennzeichnet, dass** sie eine Vorrichtung zum Messen der Stromwerte $I_w$ und $I_{w0}$ in jeder Position beinhaltet, wobei $I_w$ einem Fall entspricht, in dem ein Interferenzgitter auf der Probe gebildet wird, und $I_{w0}$ dem Fall entspricht, in dem die Probe einer solchen einheitlichen Beleuchtung ausgesetzt wird.

11. Vorrichtung nach einem der vorhergehenden Ansprüche, **dadurch gekennzeichnet, dass** sie einen Schrittmotor zur Steuerung der Bewegung des beweglichen Spiegels (7, 7') beinhaltet.

12. Vorrichtung nach einem der vorhergehenden Ansprüche, **dadurch gekennzeichnet, dass** die Probe (ECH) ein lichtleitendes Element ist.

**Claims**

1. Device for forming an interference pattern on a sample, the device comprising a laser which transmits a light beam having a wavelength $\lambda$, a beam splitter separating the beam transmitted by the laser into a first portion (11) of the first beam and a first portion (14) of the second beam, the first portion (11) of the first beam being deflected in a first direction, a first fixed deflector mirror for returning the first portion of the first beam to a point (P) of the sample (ECH) along a second portion (12) of the first beam and a first fixed angle of incidence $\theta_1$, and at least a second fixed deflector mirror for returning the first portion (14) of the second beam along a final trajectory (17) which reaches the point (P) of the sample along a second angle of incidence $\theta_2$, in order to form on the sample an interference pattern whose pitch is dependent on the angular difference $\theta$ between the first angle of incidence $\theta_1$ and the second angle of incidence $\theta_2$, the path of the second beam being **characterised in that** it comprises a deflector mirror (7, 7') which can be moved in translation or in rotation, respectively, in order to direct and return the second beam from a plurality of first return points (71), formed by a plurality of positions of the movable mirror (7) when the movable mirror can be moved in translation or formed by a plurality of points of impact of a first fixed parabolic mirror ($M_1$) when the movable mirror (7') can be moved in rotation, to a plurality of second return points (82), formed by positions of a plurality of fixed second mirrors (8) having different orientations in order to ensure that the point P of the sample is always reached by the second beam, or formed by a plurality of points of impact of a second fixed parabolic mirror (M2), forming a plurality of pairs comprising a first return point (71) and a second return point (82), each of which corresponds to a final trajectory (17) of the second beam with a different value of the angle $\theta_2$, in order to vary the value of the angle of incidence $\theta_2$ and therefore the angular difference $\theta$, and **in that** the first return points (71) are arranged along a linear or parabolic trajectory, extending from an upstream end remote from the sample where it is spaced apart from the beam (10) transmitted by the laser in the opposite direction to that of the first portion (11) of the first beam as far as a downstream end closer to the sample (ECH), the linear or parabolic trajectory developing from the upstream end as far as the downstream end in the direction of the second portion (12) of the first beam in order to compensate at least partially for the variations of the optical length of the second beam for the pairs of the first return point (71) and second return point (82), each of which corresponds to a value of the angular difference $\theta$.

2. Device according to claim 1, **characterised in that** it comprises on the path of the first portion (14) of the second beam a pair of deflector mirrors ($6_1$, $6_2$) for returning the second beam downstream of the pair of deflector mirrors ($6_1$, $6_2$) along a second portion (15) which forms with the first portion (14) a fixed angle, **in that** the second mirror is located downstream of the pair of deflector mirrors ($6_1$, $6_2$) and is constituted by a mirror (7) which can be moved in translation along the second portion (15), the second portion (15) of the second beam striking the movable mirror along a plurality of first return points (71) which are arranged along a linear trajectory in order to form downstream of the movable mirror a third portion (16) which forms a fixed angle with the second portion (15), and **in that** it comprises at least two second deflector mirrors ($8_1$, $8_2$... $8_{10}$) which are pre-positioned to return the third portion (16) of the second measurement beam which strikes the secondary deflector mirrors along the second return points (82) along the final trajectory (17) which strikes the point (P) of the sample (ECH) forming at least two different angles $\theta$ with the first measurement beam (11, 12).

3. Device according to claim 1, **characterised in that** it comprises a mirror (7') which can be moved in rotation, a first parabolic mirror ($M_1$) whose focal point ($F_1$) is placed on the path of the second beam, and on the axis of the mirror (7') which can be moved in rotation, the mirror (7') which can be moved in rotation returning the second beam from the focal point ($F_1$) on the first parabolic mirror ($M_1$), along a plurality of first points of impact (71), in order to form an intermediate portion (16) of the second beam which strikes a second parabolic mirror ($M_2$) along a plurality of second points of impact (82), the point (P) of the sample (ECH) on which the first and second beams converge being located at the focal point ($F_2$) of the second parabolic mirror ($M_2$).

4. Device according to either claim 2 or 3, **characterised in that** the first portion (14) of the second measurement beam is collinear with the beam (10) originating from the laser.

5. Device according to any one of the preceding claims, **characterised in that** it has a control module for controlling the movement of the movable mirror (7, 7') along at least two measurement positions.

6. Device according to any one of the preceding claims, **characterised in that** it comprises an element in order to vary the polarisation which is a half-wave plate $\lambda/2$ positioned on the path of a beam, in order to form an interference pattern on the sample (ECH) or to subject it to uniform illumination.

7. Device according to claim 6, **characterised in that** the half-wave plate is coupled to a chopper.

8. Device according to any one of claims 1 to 5, **characterised in that** it comprises an element to vary the polarisation which is a polariser which rotates in order to form an interference pattern on the sample (ECH) or to subject it to uniform illumination.

9. Device according to claim 8, **characterised in that** it has an electro-optical modulator which is interposed in the path of the first beam.

10. Device according to any one of claims 6 to 9, **characterised in that** it comprises a device for measuring the values of the currents $I_w$ and $I_{w0}$ at each position, $I_w$ corresponding to the case in which an interference pattern is formed on the sample, and $I_{w0}$ to the case in which the sample is subjected to uniform illumination.

11. Device according to any one of the preceding claims, **characterised in that** it comprises a stepper motor for controlling the movement of the movable mirror (7, 7').

12. Device according to any one of the preceding claims, **characterised in that** the sample (ECH) is a photoconductive element.

# Fig.1a

# Fig.1b

Fig.1c

Fig.1d

Fig.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4891582 A